# EUROPÄISCHE PATENTSCHRIFT

(11) **EP 3 513 054 B1**
(45) Veröffentlichungstag und Bekanntmachung des Hinweises auf die Patenterteilung: **23.06.2021**
(21) Anmeldenummer: 17768095.6
(22) Anmeldetag: 13.09.2017
(51) Int. Cl.: F02M 37/18, F02M 37/12, F02M 37/10

(54) **FLUIDFÖRDERVORRICHTUNG**
FLUID DELIVERY DEVICE
DISPOSITIF DE REFOULEMENT DE FLUIDE

(30) Priorität: 16.09.2016 DE 102016217800
(43) Veröffentlichungstag der Anmeldung: 24.07.2019
(73) Patentinhaber: Vitesco Technologies GmbH, 30165 Hannover (DE)
(72) Erfinder: FISCHER, Matthias, 37296 Datterode (DE); DEICHMANN, Johannes, 36199 Rotenburg (DE); SCHMICK, Andreas, 36199 Rotenburg (DE); GERST, Karsten, 36280 Oberaula (DE)
(86) Internationale Anmeldenummer: PCT/EP2017/073024
(87) Internationale Veröffentlichungsnummer: WO 2018/050696

(56) Entgegenhaltungen:
- WO-A1-02/48535
- DE-A1-102010 043 644
- DE-A1-102013 016 823
- FR-A1- 2 680 142
- GB-A- 2 341 207
- JP-U- S62 183 064

## Beschreibung

### Technisches Gebiet

Die Erfindung betrifft eine Fluidfördervorrichtung zur Förderung eines Fluids aus einem Tank, mit einer ersten Fluidförderpumpe, mit einem Schwalltopf und mit einer zweiten Fluidförderpumpe, wobei das Fluid von der ersten Fluidförderpumpe aus dem Schwalltopf förderbar ist.

### Stand der Technik

In Kraftfahrzeugen werden Tanksysteme zur Bevorratung von unterschiedlichen Flüssigkeiten eingesetzt. Unter anderem werden Tanksysteme zur Bevorratung von Kraftstoffen, Schmierstoffen oder Reduktionsmitteln, beispielsweise zur Abgasnachbehandlung, eingesetzt. Aufgrund der gegebenen Platzverhältnisse in Kraftfahrzeugen ist es manchmal notwendig einen sehr zerklüfteten Tank vorzusehen oder einen Tank, der aus mehreren miteinander verbundenen Tankkammern besteht. Im Nachfolgenden wird im Wesentlichen Bezug auf eine Anwendung in einem Kraftstofftank genommen. Gleiches gilt jedoch auch für Tanks zu Bevorratung anderer flüssiger Medien, wie beispielswiese einem Schmiermittel oder einem Reduktionsmittel.

Um jederzeit eine vollständige Entleerung des Tanks gewährleisten zu können und um sicherzugehen, dass jederzeit ausreichend Kraftstoff an der Förderstelle zur Versorgung des Verbrennungsmotors bereitsteht, muss eine Förderung des Kraftstoffs aus den von der Förderstelle entlegenen Bereichen hin zur Förderstelle erfolgen. Die Förderstelle ist dabei regelmäßig durch eine Kraftstoffförderpumpe gebildet, welche den Kraftstoff hin zum Verbrennungsmotor leitet.

Die Kraftstoffförderpumpe ist in bekannten Kraftstofffördersystemen regelmäßig in einem Schwalltopf angeordnet, welcher durch eine Saugstrahlpumpe befüllt wird, so dass stets ein ausreichendes Kraftstoffvolumen im Schwalltopf zur Verfügung steht, damit die Kraftstoffförderpumpe Kraftstoff fördern kann und nicht trocken läuft. Die Förderung des Kraftstoffs aus den entlegenen Bereichen des Kraftstofftanks oder anderen Tanckammern erfolgt bei den im Stand der Technik bekannten Vorrichtungen ebenfalls über Saugstrahlpumpen. Diese Saugstrahlpumpen, wie auch die Saugstrahlpumpe zur Versorgung des Schwalltopfes, werden passiv durch einen Bypass von der Kraftstoffförderpumpe versorgt. Sobald die Kraftstoffförderpumpe einen Kraftstoffstrom in Richtung des Verbrennungsmotors fördert, wird über einen definierten regelmäßig unveränderlichen Bypass ein Teilvolumen des Kraftstoffs abgezweigt und durch die Saugstrahlpumpen gefördert. Durch die Förderung des Kraftstoffs durch die Saugstrahlpumpe entsteht in der Saugstrahlpumpe ein Treibstrahl, der partiell einen Unterdruck erzeugt und so Kraftstoff aus der Umgebung der Saugstrahlpumpe mitreißt und diesen zur Förderstelle fördert.

Nachteilig an den Vorrichtungen im Stand der Technik ist insbesondere, dass die Saugstrahlpumpen permanent beim Betrieb der Kraftstoffförderpumpe mit betrieben werden. Hierdurch wird Leistung der Kraftstoffförderpumpe permanent abgezweigt und für die Versorgung der Saugstrahlpumpen aufgewendet. Der Betrieb der Saugstrahlpumpen ist nicht geregelt und an die tatsächliche Fahrsituation beziehungsweise den tatsächlichen momentanen Kraftstoffbedarf angepasst. Um dennoch stets eine ausreichende Kraftstoffförderung durch die Saugstrahlpumpen zu gewährleisten, muss die Kraftstoffförderpumpe entsprechend überdimensioniert werden, damit neben der tatsächlich für die Förderung des aktuell benötigten Kraftstoffs benötigte Leistung auch ausreichend Leistung zum Betrieb der Saugstrahlpumpen vorhanden ist.

Die größer dimensionierte Kraftstoffförderpumpe hat ihrerseits wieder eine höhere Stromaufnahme, wodurch insgesamt zum Betrieb des Kraftstofffördersystems mehr Energie aufgewendet werden muss, wodurch insbesondere der Gesamtkraftstoffverbrauch eines Kraftfahrzeugs erhöht wird.

Die Druckschrift JP S62 183064 U offenbart eine Kraftstofffördereinrichtung innerhalb eines Kraftstofftanks mit einer ersten und einer zweiten Fluidförderpumpe, wobei die erste Fluidförderpumpe durch einen elektrischen Motor angetrieben wird. Der Kraftstofftank ist als Satteltank mit zwei verschiedenen Teilbereichen ausgebildet. Die zweite Fluidförderpumpe fördert Kraftstoff von einem Teilbereich des Kraftstofftanks zum anderen. Die erste Fluidförderpumpe fördert zwei verschiedene Teilvolumenströme, wovon der erste zu einem Verbraucher gefördert wird, während der zweite Teilvolumenstrom dazu genutzt wird, um die zweite Fluidförderpumpe anzutreiben. Der zweite Teilvolumenstrom, der zum Antrieb der zweiten Fluidförderpumpe genutzt wird, fließt danach wieder zurück in den Tank.

Die Druckschrift FR 2 680 142 A1 offenbart eine Kraftstofffördervorrichtung und einen als Satteltank ausgebildeten Kraftstofftank sowie eine erste Fluidförderpumpe, die Kraftstoff von einem ersten Bereich des Kraftstofftanks zu einem Verbrennungsmotor fördert, und einer zweiten Fluidförderpumpe, die, angetrieben von einem überschüssigen, durch den Verbrennungsmotor nicht verbrauchten Kraftstoffvolumenstrom, Kraftstoff von einem zweiten Bereich des Kraftstofftanks zum ersten Bereich des Kraftstofftanks, in dem sich die erste Fluidförderpumpe befindet, fördert.

Die Druckschrift WO 02/48535 A1 offenbart eine Kraftstofffördervorrichtung mit einem Tank und einem Schwalltopf sowie einer ersten und einer zweiten Fluidförderpumpe, wobei die erste und die zweite Fluidförderpumpe gemeinsam durch eine Rotorwelle eines elektrischen Antriebs angetrieben werden.

Ferner offenbart die Druckschrift DE 10 2013 016823 A1 eine Kraftstofffördervorrichtung mit einem als Satteltank ausgebildeten Kraftstofftank sowie einer ersten und einer zweiten Fluidförderpumpe, wobei die zweite Fluidförderpumpe pneumatisch mithilfe eines Unterdrucktanks angetrieben wird.

Die Druckschrift DE 10 2010 043 644 A1 offenbart eine Kraftstofffördervorrichtung mit einem Kraftstofftank sowie einer ersten und einer zweiten Fluidförderpumpe, wobei die erste Fluidförderpumpe elektrisch angetrieben wird und die zweite Fluidförderpumpe von einem mit Kraftstoff zu versorgenden Verbrennungsmotor angetrieben wird.

Ferner offenbart die Druckschrift GB 2 341 207 A eine Schmierstoffpumpe, die einen Verbrennungsmotor mit Schmierstoff versorgt. Die Schmierstoffpumpe wird über einen Kraftstoffvolumenstrom, der dem Verbrennungsmotor zugeführt wird, angetrieben.

### Darstellung der Erfindung, Aufgabe, Lösung, Vorteile

Daher ist es die Aufgabe der vorliegenden Erfindung eine Fluidfördervorrichtung zu schaffen, welche einen energieeffizienteren Betrieb der benötigten Saugstrahlpumpen ermöglicht. Außerdem ist es die Aufgabe der vorliegenden Erfindung einen bedarfsgerechten Betrieb der Saugstrahlpumpen zu ermöglichen. Auch ist es die Aufgabe der Erfindung ein Kraftfahrzeug mit einer erfindungsgemäßen Fluidfördervorrichtung zu schaffen.

Die Aufgabe hinsichtlich der Fluidfördervorrichtung wird durch eine Fluidfördervorrichtung mit den Merkmalen von Anspruch 1 gelöst.

Ein Ausführungsbeispiel der Erfindung betrifft eine Fluidfördervorrichtung zur Förderung eines Fluids aus einem Tank, mit einer ersten Fluidförderpumpe, mit einem Schwalltopf und mit einer zweiten Fluidförderpumpe, wobei das Fluid von der ersten Fluidförderpumpe aus dem Schwalltopf förderbar ist, wobei die zweite Fluidförderpumpe einen Antriebsbereich aufweist und einen Förderbereich aufweist, wobei der Förderbereich mit dem Antriebsbereich gekoppelt ist und durch den Antriebsbereich antreibbar ist.
Der Antriebsbereich ist durch einen von der ersten Fluidförderpumpe geförderten Volumenstrom antreibbar.

Der Antrieb der zweiten Fluidförderpumpe durch einen Volumenstrom oder Fluidstrom, welcher von der ersten Fluidförderpumpe gefördert wird, ist vorteilhaft, da somit der Betrieb der zweiten Fluidförderpumpe direkt von dem von der ersten Fluidförderpumpe geförderten Fluidstrom abhängt. Die Förderleistung der zweiten Fluidförderpumpe steht somit immer in einem bestimmbaren Verhältnis zur Förderleistung der ersten Fluidförderpumpe.

Die zweite Fluidförderpumpe ist in Strömungsrichtung hin zu einem zu versorgenden Verbraucher der ersten Fluidförderpumpe nachgeschaltet.

Die Anordnung des Antriebsbereichs der zweiten Fluidförderpumpe stromabwärts der ersten Fluidförderpumpe ist vorteilhaft, um eine direkte Abhängigkeit der Förderleistung der zweiten Fluidförderpumpe von der Förderleistung der ersten Fluidförderpumpe zu erzeugen.

Das Fluid ist durch die zweite Fluidförderpumpe aus dem Tank in den Schwalltopf förderbar. Dies ist besonders vorteilhaft, da somit eine fortwährende Auffüllung des Schwalltopfes erzielt wird. Da die erste Fluidförderpumpe regelmäßig aus dem Schwalltopf abfördert, würde dieser ohne Zuleitung von neuem Fluid entleert werden. Da der Betrieb der zweiten Fluidförderpumpe direkt von dem Betrieb der ersten Fluidförderpumpe abhängt kann das vollständige Entleeren des Schwalltopfes vermieden werden.

Die zweite Fluidförderpumpe kann durch den gesamten von der ersten Fluidförderpumpe geförderten Fluidstrom angetrieben werden oder nur durch ein Teilvolumen des Fluidstroms. Weiterhin kann beispielsweise ein zuschaltbarer Bypasskanal zum Antrieb der zweiten Fluidförderpumpe vorgesehen werden. Dadurch lässt sich die zweite Fluidförderpumpe auch unabhängig von der ersten Fluidförderpumpe deaktivieren, indem beispielsweise der Bypasskanal nicht zur Durchströmung freigegeben wird.

Eine Fluidförderpumpe kann beispielsweise eine elektrisch betriebene Pumpe sein, die bedarfsgerecht über ein Steuergerät angesteuert wird. Eine solche Fluidförderpumpe weist einen Elektromotor auf und eine mit dem Elektromotor gekoppelte Pumpenstufe, welche ein zu förderndes Fluid fördert. Alternativ kann eine Fluidförderpumpe auch durch zwei Pumpenstufen gebildet sein, die miteinander mechanisch gekoppelt sind. So kann beispielsweise eine der Pumpenstufen von einem Fluidstrom angetrieben werden und durch die zweite Pumpenstufe, die mit der ersten Pumpenstufe gekoppelt ist, ein Fluid gefördert werden. Eine solche Fluidförderpumpe benötigt somit als Antrieb einen Fluidstrom.

Die Kopplung einer elektrischen Fluidförderpumpe und einer beispielsweise mechanisch arbeitenden Fluidförderpumpe, wie oben beschrieben, kann vorteilhaft genutzt werden, um beispielsweise ein Fluid aus einem Tank hin zu einem Reservoir beziehungsweise einem Schwalltopf zu fördern und das Fluid aus diesem Reservoir weiter zu einem Verbraucher zu fördern. Wenn die zweite Fluidförderpumpe dabei von einem von der ersten Fluidförderpumpe geförderten Fluidstrom angetrieben wird, ist auf einfache Weise ein von der Ansteuerung der ersten Fluidförderpumpe abhängiger Betrieb der zweiten Fluidförderpumpe realisiert.

Bevorzugt weist eine oben beschrieben zweite Fluidförderpumpe einen Antriebsbereich und einen Förderbereich auf, die zum Zwecke der Übertragung der Drehbewegung miteinander gekoppelt sind. Die zweite Fluidförderpumpe kann in einem besonders bevorzugten Ausführungsbeispiel nach dem Prinzip eines Turboladers funktionieren, bei welchem ein Fluidstrom zum Antrieb verwendet wird.

Besonders vorteilhaft ist es, wenn der Förderbereich und der Antriebsbereich mechanisch durch eine gemeinsame Welle miteinander gekoppelt sind. Die mechanische Kopplung ist besonders vorteilhaft, da somit eine besonders einfache, robuste, langlebige und kostengünstige Fluidförderpumpe erzeugt werden kann. Die Kopplung des Antriebsbereichs an den Förderbereich kann ohne zusätzliche Übersetzung durch einen einfachen Durchtrieb erzeugt werden. In einer alternativen Ausgestaltung kann auch eine Übersetzung vorgesehen werden. In einer weiteren vorteilhaften Ausgestaltung kann die Übertragung der Drehbewegung von dem Antriebsbereich auf den Förderbereich auch schaltbar sein, um beispielsweise durch das Öffnen einer Kupplung, beispielsweise einer Reibkupplung, die Förderleistung der zweiten Fluidförderpumpe auf einen niedrigeren Wert oder vollständig auf null zu reduzieren.

Besonders vorteilhaft ist es, wenn der die zweite Fluidförderpumpe antreibende Fluidstrom durch den von der ersten Fluidförderpumpe zum Verbraucher geförderten Fluidstrom gebildet ist. In einer Anwendung in einem Kraftfahrzeug kann der Antriebsbereich der zweiten Fluidförderpumpe beispielsweise vorteilhaft in den sogenannten Vorlauf zur Versorgung des Verbrennungsmotors eingebunden sein. Somit ist sichergestellt, dass die zweite Fluidförderpumpe bedarfsgerecht in Abhängigkeit vom tatsächlichen Kraftstoffbedarf des Verbrennungsmotors angesteuert wird. In Kraftfahrzeugen mit Verbrennungsmotor wird die Hauptkraftstoffförderpumpe, die der ersten Fluidförderpumpe der erfindungsgemäßen Ausführung entspricht, von einem Steuergerät derart angesteuert, dass stets die exakt benötigte Kraftstoffmenge zu dem Verbrennungsmotor gefördert wird. Dies stellt unter anderem sicher, dass nicht unnötig viel elektrische Leistung zur Förderung eines zu großen Kraftstoffvolumens aufgewendet wird. Eine Kopplung der Förderleistung der zweiten Fluidförderpumpe an die Förderleistung der ersten Fluidförderpumpe ist vorteilhaft, da so sichergestellt wird, dass jederzeit eine geeignete Nachförderung von Kraftstoff aus dem Tank in den Schwalltopf hinein stattfindet. Entsprechend des aus dem Schwalltopf zum Verbrennungsmotor geförderten Kraftstoffs kann eine Auffüllung des Schwalltopfes durch die zweite Fluidförderpumpe erzeugt werden.

Auch ist es zu bevorzugen, wenn der Antriebsbereich und/oder der Förderbereich eine Pumpenstufe aufweist. Pumpstufen, wie beispielsweise Turbinenräder oder Schaufelräder, sind vorteilhaft, um die Energie des Volumenstroms, der von der ersten Fluidförderpumpe gefördert wird, über eine Welle auf ein als Antrieb genutztes Schaufelrad zu übertagen und somit eine Pumpleistung in der zweiten Fluidförderpumpe zu erzeugen.

Neben herkömmlichen Turbinenrädern und Schaufelrädern, können auch weitere zur Förderung von Fluiden benutzbare Pumpstufen vorgesehen werden. So kann die zweite Fluidförderpumpe beispielsweise auch unter Ausnutzung des Verdrängungsprinzips eine Fluidförderung erzeugen. Die Auswahl eines Pumpenprinzips ist praktisch unbegrenzt, solange eine Kopplung des Antriebsbereichs und des Förderbereichs der zweiten Fluidförderpumpe erreicht wird und so eine Abhängigkeit zwischen dem die zweite Fluidförderpumpe antreibenden Fluidstrom und dem durch die zweite Fluidförderpumpe geförderten Fluidstrom erzeugt wird.

Darüber hinaus ist es vorteilhaft, wenn der Förderbereich der zweiten Fluidförderpumpe fluidisch mit einer Saugstrahlpumpe gekoppelt ist, wobei durch den durch die zweite Fluidförderpumpe geförderten Volumenstrom die Saugstrahlpumpe betreibbar ist. Durch die zweite Fluidförderpumpe kann vorteilhafterweise noch eine zusätzliche Saugstrahlpumpe betrieben werden, um beispielsweise weitere Aggregate mit einem Fluidstrom zu versorgen. Dies ist insbesondere vorteilhaft, wenn aus mehreren voneinander beabstandeten Bereichen in einem Tank ein Fluid weggefördert werden soll.

Auch ist es zweckmäßig, wenn die erste Fluidförderpumpe in dem Schwalltopf angeordnet ist. Dies ist vorteilhaft, um stets eine konstante Fluidversorgung der ersten Fluidförderpumpe sicherzustellen und das Trockenlaufen der ersten Fluidförderpumpe zu vermeiden. Der Schwalltopf bildet hierbei insbesondere ein Reservoir, aus welchem die ersten Fluidförderpumpe das Fluid heraus fördert. Somit ist auch bei einer möglichen Schräglage des Tanks sichergestellt, dass der Ansaugbereich der ersten Fluidförderpumpe jederzeit in das im Schwalltopf befindliche Fluid eintaucht.

Die Aufgabe hinsichtlich des Kraftfahrzeugs mit einer erfindungsgemäßen Fluidfördervorrichtung wird durch ein Kraftfahrzeug mit den Merkmalen von Anspruch 9 gelöst.

Ein Ausführungsbeispiel der Erfindung betrifft ein Kraftfahrzeug mit einer Fluidfördervorrichtung nach einem der vorhergehenden Ansprüche, wobei das in dem Schwalltopf befindliche Fluid durch die erste Fluidförderpumpe hin zu einem Verbrennungsmotor förderbar ist, wobei die zweite Fluidförderpumpe der ersten Fluidförderpumpe in Förderrichtung hin zum Verbrennungsmotor nachgeschaltet angeordnet ist und durch den Betrieb der zweiten Fluidförderpumpe der Schwalltopf befüllbar ist. Insbesondere die Anwendung in dem Kraftstoffversorgungssystems eines Kraftfahrzeugs ist vorteilhaft. Durch die Kopplung der zweiten Fluidförderpumpe an die erste Fluidförderpumpe wird sichergestellt, dass entsprechend des Kraftstoffbedarfs des Verbrennungsmotors eine konstante Nachförderung des Kraftstoffs aus dem Tank oder einzelnen Tankkammern in den Schwalltopf hinein erfolgt. Besonders vorteilhaft ist dabei, dass die Förderleistung der zweiten Fluidförderpumpe automatisch mit einer Veränderung der Förderleistung der ersten Fluidförderpumpe verändert wird. Verbraucht der Verbrennungsmotor beispielsweise weniger Kraftstoff, wird die Förderleistung der ersten Fluidförderpumpe reduziert. Somit wird ein geringerer Fluidstrom von der ersten Fluidförderpumpe gefördert, wodurch auch die Förderleistung der zweiten Fluidförderpumpe reduziert wird.

Darüber hinaus ist es vorteilhaft, wenn die zweite Fluidförderpumpe über eine erste Fluidleitung mit einem oder mehreren Bereichen des Kraftstofftanks in Fluidkontakt steht und über eine zweite Fluidleitung mit dem Innenvolumen des Schwalltopfes in Fluidkontakt steht, wobei durch einen Betrieb der zweiten Fluidförderpumpe Kraftstoff aus dem Tank in den Schwalltopf förderbar ist.

Durch das Vorsehen von einer oder mehreren Fluidleitungen, die von dem Ansaugbereich der zweiten Fluidförderpumpe in den Tank ragen, kann sichergestellt werden, dass alle Bereiche des Tanks durch die zweite Fluidförderpumpe entleert werden können. In einer vorteilhaften Ausgestaltung kann es beispielsweise vorgesehen werden, dass unterschiedliche Fluidleitungen, aus denen die zweite Fluidförderpumpe gespeist werden kann, zugeschaltet oder abgeschaltet werden, um beispielsweise das Ansaugen von Luft zu verhindern. Auch können mehrere zweite Fluidförderpumpen vorgesehen werden, um Kraftstoff aus unterschiedlichen Bereichen zu fördern.

Vorteilhafte Weiterbildungen der vorliegenden Erfindung sind in den Unteransprüchen und in der nachfolgenden Figurenbeschreibung beschrieben.

### Kurze Beschreibung der Zeichnungen

Im Folgenden wird die Erfindung anhand von Ausführungsbeispielen unter Bezugnahme auf die Zeichnungen detailliert erläutert. In den Zeichnungen zeigen:
- Fig. 1: eine schematische Schnittansicht eines Tanks mit einem darin befindlichen Schwalltopf, einer ersten Fluidförderpumpe und mit einer zweiten Fluidförderpumpe, und
- Fig. 2: eine Schnittansicht durch eine beispielhafte zweite Fluidförderpumpe, wobei ein Antriebsbereich und ein Förderbereich vorgesehen sind, die mechanisch miteinander gekoppelt sind, um die Bewegung des Antriebsbereichs auf den Förderbereich zu übertragen.

### Bevorzugte Ausführung der Erfindung

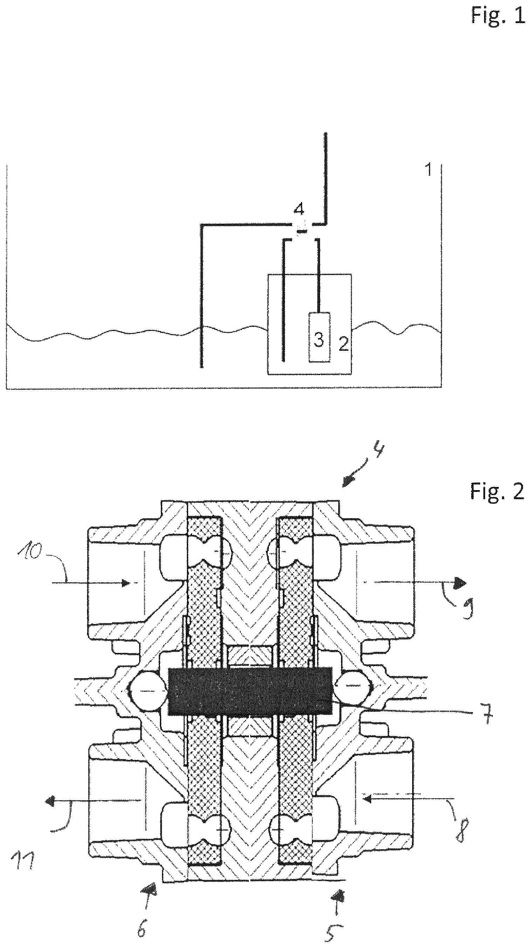

Die Figur 1 zeigt eine schematische Schnittansicht durch einen Tank 1. Innerhalb des Tanks 1 ist ein Schwalltopf 2 angeordnet. Der Schwalltopf 2 dient zur Bevorratung eines Kraftstoffvolumens, aus welchem die erste Fluidförderpumpe 3, welche innerhalb des Schwalltopfes 2 angeordnet ist, ansaugt. Dies verhindert, wie bei konventionellen Kraftstoffversorgungssystemen, dass die Ansaugöffnung der ersten Fluidförderpumpe 3 Luft ansaugt. Dies kann sonst beispielsweise bei einer Bergfahrt oder einer beschleunigten Kurvenfahrt geschehen, wenn der Kraftstoff von der Ansaugöffnung der ersten Fluidförderpumpe 3 weggetrieben wird.

Die erste Fluidförderpumpe 3 fördert Kraftstoff aus dem Schwalltopf 2 hin zu einem nicht gezeigten Verbrennungsmotor. Dabei wird die erste Fluidförderpumpe 3 von einem ebenfalls nicht gezeigten Steuergerät derart angesteuert, dass dem Verbrennungsmotor entsprechend des tatsächlichen Kraftstoffbedarfs Kraftstoff zugeführt wird.

In der Vorlaufleitung, welche von der ersten Fluidförderpumpe 3 hin zum Verbrennungsmotor verläuft ist eine zweite Fluidförderpumpe 4 angeordnet, welche dazu dient Kraftstoff aus dem Tank 1 in den Schwalltopf 2 zu fördern. Die zweite Fluidförderpumpe 4 wird dabei von dem Fluidstrom, den die erste Fluidförderpumpe 3 zum Verbrennungsmotor fördert, angetrieben. Hierzu wird entweder der gesamte Fluidstrom durch die zweite Fluidförderpumpe 4 geleitet oder nur ein Teilvolumen des von der ersten Fluidförderpumpe 3 geförderten Kraftstoffs.

Durch eine Anordnung gemäß der Figur 1 wird erreicht, dass der Schwalltopf 2 jederzeit, sofern der Tank 1 mit Kraftstoff befüllt ist, durch die zweite Fluidförderpumpe 4 befüllt wird. Außerdem wird durch die Kopplung der zweiten Fluidförderpumpe 4 an die erste Fluidförderpumpe 3 erreicht, dass jeweils eine bedarfsgerechte Nachförderung des Kraftstoffs geschieht.

Die Figur 2 zeigt ein Schnittbild durch die zweite Fluidförderpumpe 4. Die zweite Fluidförderpumpe 4 weist im Wesentlichen einen Antriebsbereich 5 und einen Förderbereich 6 auf. Die beiden Bereiche 5 und 6 sind mechanisch über eine Welle 7 miteinander gekoppelt. Der Antriebsbereich 5 besteht im Wesentlichen aus einem Pumpenrad, welches als Pumpenstufe fungiert und von dem von der ersten Fluidförderpumpe geförderten Volumenstrom angetrieben werden kann. Der Förderbereich 6 weist ebenfalls ein Pumpenrad auf, welches als Pumpenstufe fungiert und über die Welle 7 angetrieben wird. Dadurch kann im Förderbereich 6 eine Förderung von Fluid stattfinden.

Entlang des Pfeils 8 strömt der Volumenstrom, der von der ersten Fluidförderpumpe 3 gefördert wird in die zweite Fluidförderpumpe 4 ein und treibt die Pumpenstufe des Antriebsbereichs 5 an. Entlang des Pfeils 9 strömt dieser Volumenstrom schließlich aus dem Antriebsbereich 5 aus und hin zum Verbrennungsmotor.

Durch die über die Welle 7 übertragene Drehbewegung der Pumpenstufe des Antriebsbereichs 5 wird die Pumpenstufe des Förderbereichs 6 angetrieben, wodurch Kraftstoff entlang des Pfeils 10 in den Förderbereich 6 der zweiten Fluidförderpumpe 4 eingesaugt wird und entlang des Pfeils 11 hin zum Schwalltopf gepumpt wird.

Das Ausführungsbeispiel der Figur 2 zeigt beispielshaft eine mögliche Ausgestaltung für eine erfindungsgemäße zweite Fluidförderpumpe 4. Die Kopplung erfolgt im gezeigten Beispiel mechanisch über die Welle 7. In alternativen Ausgestaltungen können auch abweichende Pumpenkonzepte vorgesehen werden. So können beispielsweise Zahnradmotorpumpen oder Turbinen vorgesehen werden.

## Patentansprüche

1. Fluidfördervorrichtung zur Förderung eines Fluids aus einem Tank, mit einer ersten Fluidförderpumpe (3), mit einem Schwalltopf (2) und mit einer zweiten Fluidförderpumpe (4), wobei das Fluid von der ersten Fluidförderpumpe (3) aus dem Schwalltopf (2) förderbar ist, wobei die zweite Fluidförderpumpe (4) einen Antriebsbereich (5) aufweist und einen Förderbereich (6) aufweist, wobei der Förderbereich (6) mit dem Antriebsbereich (5) gekoppelt ist und durch den Antriebsbereich (5) antreibbar ist, wobei der Antriebsbereich (5) durch einen von der ersten Fluidförderpumpe (3) geförderten Volumenstrom antreibbar ist,
**dadurch gekennzeichnet, dass**
die zweite Fluidförderpumpe (4) in Strömungsrichtung hin zu einem zu versorgenden Verbraucher der ersten Fluidförderpumpe (3) nachgeschaltet ist und dass das Fluid durch die zweite Fluidförderpumpe (4) aus dem Tank (1) in den Schwalltopf (2) förderbar ist.

2. Fluidfördervorrichtung nach Anspruch 1, **dadurch gekennzeichnet, dass** der Förderbereich (6) und der Antriebsbereich (5) mechanisch durch eine gemeinsame Welle (7) miteinander gekoppelt sind.

3. Fluidfördervorrichtung nach einem der vorhergehenden Ansprüche, **dadurch gekennzeichnet, dass** der Antriebsbereich (5) und/oder der Förderbereich (6) eine Pumpenstufe aufweist.

4. Fluidfördervorrichtung nach einem der vorhergehenden Ansprüche, **dadurch gekennzeichnet, dass** der Förderbereich (6) der zweiten Fluidförderpumpe (4) fluidisch mit einer Saugstrahlpumpe gekoppelt ist, wobei durch den durch die zweite Fluidförderpumpe (4) geförderten Volumenstrom die Saugstrahlpumpe betreibbar ist.

5. Fluidfördervorrichtung nach einem der vorhergehenden Ansprüche, **dadurch gekennzeichnet, dass** die erste Fluidförderpumpe (3) in dem Schwalltopf (2) angeordnet ist.

6. Kraftfahrzeug mit einer Fluidfördervorrichtung nach einem der vorhergehenden Ansprüche, wobei das in dem Schwalltopf (2) befindliche Fluid durch die erste Fluidförderpumpe (3) hin zu einem Verbrennungsmotor förderbar ist, **dadurch gekennzeichnet, dass** die zweite Fluidförderpumpe (4) der ersten Fluidförderpumpe (3) in Förderrichtung hin zum Verbrennungsmotor nachgeschaltet angeordnet ist und durch den Betrieb der zweiten Fluidförderpumpe (4) der Schwalltopf (2) befüllbar ist.

7. Kraftfahrzeug nach Anspruch 6, **dadurch gekennzeichnet, dass** die zweite Fluidförderpumpe (4) über eine erste Fluidleitung mit einem oder mehreren Bereichen des Tanks (1) in Fluidkontakt steht und über eine zweite Fluidleitung mit dem Innenvolumen des Schwalltopfes (2) in Fluidkontakt steht, wobei durch einen Betrieb der zweiten Fluidförderpumpe (4) Kraftstoff aus dem Tank in den Schwalltopf (2) förderbar ist.

## Claims

1. Fluid-conveying apparatus for conveying a fluid from a tank, having a first fluid-conveying pump (3), having a swirl pot (2) and having a second fluid-conveying pump (4), wherein the fluid is able to be conveyed from the swirl pot (2) by the first fluid-conveying pump (3), wherein the second fluid-conveying pump (4) has a drive region (5) and has a conveying region (6), wherein the conveying region (6) is coupled to the drive region (5) and is able to be driven by way of the drive region (5), wherein the drive region (5) is able to be driven by a volume stream conveyed by the first fluid-conveying pump (3),
**characterized in that**
the second fluid-conveying pump (4) is arranged downstream of the first fluid-conveying pump (3) in a flow direction towards a consumer to be provided with a supply, and **in that** the fluid is able to be conveyed from the tank (1) into the swirl pot (2) through the second fluid-conveying pump (4).

2. Fluid-conveying apparatus according to Claim 1,
**characterized in that** the conveying region (6) and the drive region (5) are mechanically coupled to one another by way of a common shaft (7).

3. Fluid-conveying apparatus according to either of the preceding claims, **characterized in that** the drive region (5) and/or the conveying region (6) have/has a pump stage.

4. Fluid-conveying apparatus according to one of the preceding claims, **characterized in that** the conveying region (6) of the second fluid-conveying pump (4) is fluidically coupled to a suction jet pump, wherein the suction jet pump is able to be operated by the volume stream conveyed through the second fluid-conveying pump (4).

5. Fluid-conveying apparatus according to one of the preceding claims, **characterized in that** the first fluid-conveying pump (3) is arranged in the swirl pot (2).

6. Motor vehicle having a fluid-conveying apparatus according to one of the preceding claims, wherein the fluid situated in the swirl pot (2) is able to be conveyed to an internal combustion engine through the first fluid-conveying pump (3), **characterized in that** the second fluid-conveying pump (4) is arranged downstream of the first fluid-conveying pump (3) in a conveying direction towards the internal combustion engine, and the swirl pot (2) is able to be filled by way of the operation of the second fluid-conveying pump (4).

7. Motor vehicle according to Claim 6, **characterized in that** the second fluid-conveying pump (4) is in fluid contact with one or more regions of the tank (1) via a first fluid line and is in fluid contact with the inner volume of the swirl pot (2) via a second fluid line, wherein fuel is able to be conveyed from the tank into the swirl pot (2) by way of operation of the second fluid-conveying pump (4).

## Revendications

1. Dispositif de refoulement de fluide destiné à refouler un fluide hors d'un réservoir, comprenant une première pompe de refoulement de fluide (3), comprenant un pot stabilisateur (2) et comprenant une deuxième pompe de refoulement de fluide (4), le fluide pouvant être refoulé hors du pot stabilisateur (2) par la première pompe de refoulement de fluide (3), la deuxième pompe de refoulement de fluide (4) possédant une zone d'entraînement (5) et une zone de refoulement (6), la zone de refoulement (6) étant couplée à la zone d'entraînement (5) et pouvant être entraînée par la zone d'entraînement (5), la zone d'entraînement (5) pouvant être entraînée par un débit volumique refoulé par la première pompe de refoulement de fluide (3),
**caractérisé en ce que**
la deuxième pompe de refoulement de fluide (4), dans le sens de l'écoulement, est montée en aval de la première pompe de refoulement de fluide (3) vers un récepteur à alimenter et **en ce que** le fluide peut être refoulé hors du réservoir (1) dans le pot stabilisateur (2) par la deuxième pompe de refoulement de fluide (4).

2. Dispositif de refoulement de fluide selon la revendication 1, **caractérisé en ce que** la zone de refoulement (6) et la zone d'entraînement (5) sont couplées mécaniquement entre elles par un arbre (7) commun.

3. Dispositif de refoulement de fluide selon l'une des revendications précédentes, **caractérisé en ce que** la zone d'entraînement (5) et/ou la zone de refoulement (6) possède un étage de pompage.

4. Dispositif de refoulement de fluide selon l'une des revendications précédentes, **caractérisé en ce que** la zone de refoulement (6) de la deuxième pompe de refoulement de fluide (4) est reliée fluidiquement à une pompe à jet aspirant, la pompe à jet aspirant pouvant être actionnée par le débit volumique refoulé à travers la deuxième pompe de refoulement de fluide (4).

5. Dispositif de refoulement de fluide selon l'une des revendications précédentes, **caractérisé en ce que** la première pompe de refoulement de fluide (3) est disposée dans le pot stabilisateur (2).

6. Véhicule automobile comprenant un dispositif de refoulement de fluide selon l'une des revendications précédentes, le fluide qui se trouve dans le pot stabilisateur (2) pouvant être refoulé par la première pompe de refoulement de fluide (3) vers un moteur à combustion interne, **caractérisé en ce que** la deuxième pompe de refoulement de fluide (4) est montée en aval de la première pompe de refoulement de fluide (3) dans le sens du refoulement et le pot stabilisateur (2) peut être rempli par le fonctionnement de la deuxième pompe de refoulement de fluide (4).

7. Véhicule automobile selon la revendication 6, **caractérisé en ce que** la deuxième pompe de refoulement de fluide (4) se trouve en contact fluidique avec une ou plusieurs zones du réservoir (1) par le biais d'une première conduite de fluide et se trouve en contact fluidique avec le volume interne du pot stabilisateur (2) par le biais d'une deuxième conduite de fluide, du carburant pouvant être refoulé hors du réservoir dans le pot stabilisateur (2) par un fonctionnement de la deuxième pompe de refoulement de fluide (4).
